# EUROPEAN PATENT SPECIFICATION

(11) **EP 2 120 163 B1**
(45) Date of publication and mention of the grant of the patent: **04.08.2010**
(21) Application number: 09159643.7
(22) Date of filing: 07.05.2009
(51) Int. Cl.: G06F 17/30

(54) **System and method for dynamic plug-in activation in a web browser**
System und Verfahren zur dynamischen Plug-In-Aktivierung in einem Netzbrowser
Système et procédé pour l'activation dynamique d'un plug-in dans un navigateur Web

(30) Priority: 12.05.2008 US 52627 P
(43) Date of publication of application: 18.11.2009
(73) Proprietor: RESEARCH IN MOTION LIMITED, Waterloo, Ontario N2L 3W8 (CA)
(72) Inventor: Smith, Christopher, Mississauga Ontario L4W 0B4 (CA); Vitanov, Kamen, Mississauga Ontario L4W 0B4 (CA); Padiasek, Grzegorz, Mississauga Ontario L4W 0B4 (CA)
(74) Representative: Patel, Binesh

(56) References cited:
- US-A1- 2006 129 982
- JINGYU SONG ET AL: "An HTML fragments based approach for portlet interoperability" DISTRIBUTED APPLICATIONS AND INTEROPERABLE SYSTEMS. 7TH IFIP WG 6.1 INTERNATIONAL CONFERENCE, DAIS 2007 - 6-8 JUNE 2007 - PAPHOS, CYPRUS, SPRINGER-VERLAG - BERLIN, GERMANY, [Online] 6 June 2007 (2007-06-06), pages 195-209, XP002528766 Retrieved from the Internet: URL:http://www.springerlink.com/content/jt 6l6u7394h56m18/fulltext.pdf> [retrieved on 2009-05-19]
- BIRSAN D: "On plug-ins and Extensible Architectures" ACM QUEUE, [Online] vol. 3, no. 2, March 2005 (2005-03), pages 40-46, XP002551161 Toronto, Ont., Canada ISSN: 1542-7730 Retrieved from the Internet: URL:http://delivery.acm.org/10.1145/106000 0/1053345/p40-birsan.pdf?key1=1053345&key2 =0582695521&coll=GUIDE&dl=GUIDE&CFID=58492 334&CFTOKEN=66258567> [retrieved on 2009-10-19]

## Description

### FIELD

The present matter relates generally to the field of computing and more particularly, relates to a system and method for dynamically activating a Web browser plug-in.

### BACKGROUND

A Web browser is a software application for execution on a client computing device that enables a user of that device to display and interact with the content of a Web page provided by a website on the World Wide Web (Web) or a local area network (e.g. an Intranet). Websites are distinguished or addressed, at least in part, using an Internet domain name such as, "wikipedia.org." Web browsers provide basic browsing controls (e.g. via toolbars, menus, etc.) and functions for navigating between and controlling Web pages. Various specific browser enhancements can be provided (typically, via third parties) by software plug-ins that are installed on a client device to modify the Web browser. For example Web applications such as Facebook® and Wikipedia® currently have domain specific toolbars that are installed as a plug-in for browsers such as Mozilla Firefox® and Microsoft Internet Explorer®. Plug-ins may allow the user to add one or more of toolbars, menu options and other predefined actions with Web application specific options to enhance the user's ability to control the underlying Web application.

United States patent application no. 11/058,436, "Method and System for Hypermedia Browser API Simulation to Enable use of Browser Plug-ins and Applets as Embedded Widgets in Script-Language-Based Interactive Programs," describes providing high-level extensible scripting language interpreters to incorporate and employ Web browser plug-ins as components within script-based programs. It also describes a script interpreter extension that stimulates the plug-in API interface of a Web browser to allow program scripts to cause browser plug-ins to be launched and manipulated, in a manner similar to the scripting platform's native widgets, from within the executing program script.

### BRIEF DESCRIPTION OF THE DRAWINGS

The present matter may be further understood by reference to following description in conjunction with the appended drawings in which:

FIG. 1 is a block diagram of a system according to an embodiment;

FIG. 2 is a block diagram of a mobile device according to the present matter;

FIG. 3 is a conceptual block diagram of a process in accordance with one aspect of the present matter;

FIG. 4 is a flow chart for initializing a plug-in accordingly to an embodiment of the present matter;

FIG. 5 is a flow chart for activating a plug-in according to an embodiment of the present matter;

FIG. 6 is a schematic diagram of a browser screen according to the present matter;

FIG. 7 is a block diagram of system in accordance with an embodiment; and

FIG. 8 is a flowchart for activating a plug-in according to the embodiment of FIG. 7.

### DETAILED DESCRIPTION

In the following description like numerals refer to like structures and process in the diagrams.

One problem with domain specific plug-ins in a Web browser is that each toolbar or menu option takes up screen space in the browser which increases the amount a user may be required to scroll to view an entire page or menu. This problem is exacerbated with browsers presenting Web content to a display screen having a relatively smaller physical screen size, such as those on portable terminals, mobile devices and the like.

Another problem is the state of a plug-in: it is either on or off. When left on, if the plug-in polls a backend server for information, this activity may use unnecessary resources including network usage, client computing device processing and storage or any combination thereof. This activity may pose a more significant problem for mobile devices or devices using wireless networks which tend to be relatively expensive compared to lower cost wired networks.

Accordingly there is a need for a system and method which mitigates at least some of the above disadvantages.

A computing device, method and computer program product provide for dynamically activating a domain specific plug-in for operation with a Web browser. A mapping is defined that provides an association between the plug-in and at least part of each website with which the plug-in is to operate, with the mapping comprising a respective domain name for each website. The plug-in is activated for operation, in accordance with the mapping, only when a current domain that is active with the Web browser is associated with the plug-in. The mapping may comprise a domain filter comprising a URL expression. Plug-ins that are domain specific may be made accessible only when a user is actively using the domain, allowing the user to use one or more plug-ins simultaneously without unnecessarily sacrificing screen space and/or bandwidth used by the plug-in.

In accordance with one aspect of the present matter there is provided a method for dynamically activating a plug-in for operation with a Web browser. The method comprises defining a mapping providing an association between the plug-in and at least part of each website with which the plug-in is to operate, said mapping comprising a respective domain name for each website; and activating the plug-in for operation, in accordance with the mapping, only when a current domain that is active with the Web browser is associated with the plug-in.

The mapping may comprise at least one domain filter identifying at least a part of a respective website with which the plug-in is to operate.

The method may further comprise defining respective mappings for a plurality of respective plug-ins and the parts of each websites with which the respective plug-ins are to operate, said mapping comprising a respective domain name for each website; and activating a particular plug-in for operation in accordance with the mappings only when the current domain that is active with the Web browser is associated with the particular plug-in.

The method may further comprise monitoring the current domain to determine whether to activate or deactivate the plug-in.

The plug-in may be configured to obtain an updated list comprising one or more domain names for identifying each website with which it is to be associated and as such the method may comprise updating the mapping in response to the list.

The plug-in may be configured to operate with at least one vendor's website providing e-commerce services.

The plug-in may be configured to obtain transcoded Web pages from Web pages of the respective websites with which it is to operate and as such the method may further comprise invoking the plug-in to obtain transcoded Web pages from at least some of the Web pages of the current domain. For example, the plug-in may be configured to assist with the completion an e-commerce transaction and the method may comprise invoking the plug-in to complete a particular transaction at the current domain.

The Web browser may be a mini browser. The Web browser may executed on a mobile device configured for wireless communication.

In accordance with another aspect there is provided a computing device comprising a processor and a memory coupled thereto, said memory storing instructions for configuring the processor when executed to dynamically activate a plug-into a Web browser in accordance with the method aspect.

In accordance with another aspect there is provided a computer program product storing computer readable instructions for configuring a computer processor when executed to dynamically activate a plug-in for operation with a Web browser in accordance with the method aspect.

It will also be recognized that there is described a method for dynamically activating a plug-in for operation with a Web browser for conducting an e-commerce transaction. The method may comprise defining a mapping providing an association between the plug-in and at least one domain identifying a respective e-commerce website with which the plug-in is to operate to conduct an e-commerce transaction; and activating the plug-in for operation, in accordance with the mapping, only when a current domain that is active with the Web browser is associated with the plug-in. The plug-in may be configured to obtain transcoded Web pages from Web pages of the respective websites with which it is to operate and as such the method may further comprise invoking the plug-in to obtain transcoded Web pages from at least some of the Web pages of the current domain. The plug-in may be configured to assist with the completion of an e-commerce transaction at a particular website by providing payment data to at least one Web page of the particular website. As such the method may further comprise activating the plug-in to complete a particular transaction at the current domain. The plug-in may be configured to communicate with the particular website for at least some of Web pages indirectly through an intermediate server configured to provide transcoded Web pages. The Web browser may be executed on a mobile device configured for wireless communication.

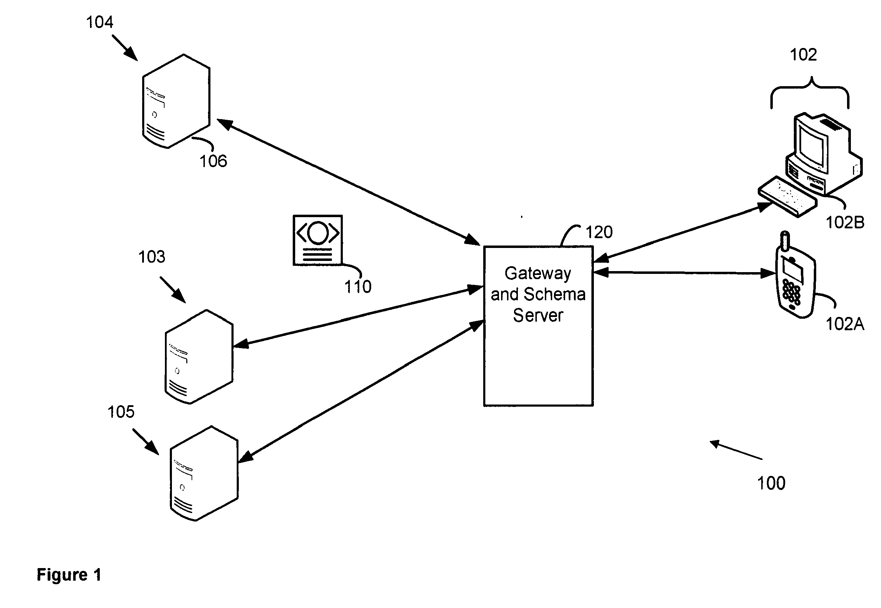

Referring now to FIG. 1, there is illustrated a representative system 100 for content navigation via a telecommunications network. In a present embodiment system 100 comprises a plurality of client computing devices in the form of client machines 102A and 102B (collectively 102), a website server 106 hosting a website 104 and an intermediate server, namely, gateway and schema server 120. Devices 102 are respectively coupled to communicate with gateway and schema server 120 to obtain Web pages (e.g. 110) from website 104. Though not shown, it will be understood that client devices 102 may communicate directly with website server 106.

Representative client machines 102 include any type of computing or electronic device that can be used to communicate and interact with content available via websites. Each of the client machines 102 may be operated by a respective user U (not shown). Interaction with a particular user includes presenting information on a client machine (e.g. by rendering on a display screen) as well as receiving input at a client machine (e.g. such as via a keyboard for transmitting to a website). In the present embodiment, client machine 102A comprises a mobile electronic device with the combined functionality of a personal digital assistant, cell phone, email paging device, and a web browser. Such a mobile electronic device may comprise a keyboard (or other input device(s)), a display screen, a speaker, (and other output device(s) (e.g. LEDs)) and a chassis for housing such components. The chassis may further house one or more central processing units, volatile memory (e.g. random access memory), persistent memory (e.g. Flash read only memory) and network interfaces to allow client machine 102A to communicate over the telecommunication network.

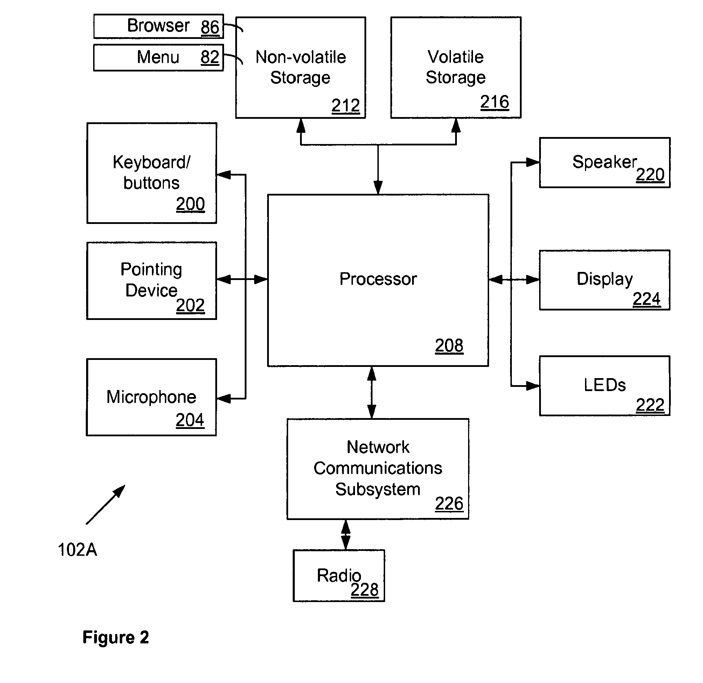

Referring now to FIG. 2, a schematic block diagram shows an exemplary client computing device or client machine 102A to which embodiments of the present matter may be applied. It should be emphasized that the structure in FIG. 2 is purely exemplary, and contemplates a device that may be used for both wireless voice (e.g. telephony) and wireless data (e.g. email, Web browsing, text) communications. Client machine 102A includes a plurality of input devices, which in a present embodiment includes a keyboard and, typically, additional input buttons, collectively 200, an optional pointing device 202 (e.g. a trackball or trackwheel) and a microphone 204. Other input devices, such as a touch screen, and camera lens are also contemplated. Input from keyboard/buttons 200, pointing device 202 and microphone 204 may be received at a processor 208. Processor 208 may be further operatively coupled with a non-volatile storage unit 212 (e.g. read only memory ("ROM"), Erasable Electronic Programmable Read Only Memory ("EEPROM"), or Flash Memory) and a volatile storage unit 216 (e.g. random access memory ("RAM"), speaker 220, display screen 224 and one or more lights 222 (e.g. LEDs). Processor 208 may be operatively coupled for network communications via a communications subsystem 226. Wireless communications are effective via at least one radio (e.g. 228) such as for Wi-Fi or cellular wireless communications. Client machine 102A also may be configured for wired communications such as via a USB or other port and for short range wireless communications such as via a Bluetooth® radio (all not shown).

Programming instructions that implement the functional teachings of client machine 102A as described herein are typically maintained, persistently, in non-volatile storage unit 212 and used by processor 208 which makes appropriate utilization of volatile storage 216 during the execution of such programming instructions. Of particular note is that non-volatile storage unit 212 persistently maintains a Web browser application 86 and, in the present embodiment, a native menu application 82, each of which can be executed on processor 208 making use of volatile storage 216 as appropriate. An operating system and various other applications (not shown) are maintained in non-volatile storage unit 212 according to the desired configuration and functioning of client machine 102A, one specific non-limiting example of which is a contact manager application (also known as an address book, not shown) which stores a list of contacts, addresses and phone numbers of interest to user U and allows user U to view, update, and delete those contacts, as well as providing user U an option to initiate telecommunications (e.g. telephone, email, instant message (IM), short message service (SMS)) directly from that contact manager application.

Native menu application 82 may be configured to provide menu choices to user U according to the particular application (or other context) that is being accessed. By way of example, while user U is activating a contact manager application, user U can activate menu application 82 to access a plurality of menu choices available that are respective to the contact manager application. For example, menu choices may include options to invoke other applications (e.g. a mapping application to map a contact's address) or communication functions (e.g. call, SMS, IM, email, etc.) on the client machine 102A for a particular contact. Menu application 82 may be associated to a particular input button (e.g. one of buttons 200) and invoked to provide a contextual menu comprised of a plurality of menu choices that are reflective of the context in which the button 200 was selected. Note that the options in a contextual menu are stored within non-volatile storage 212 as being specifically associated with a respective application. Menu application 82 may be therefore configured to generate a plurality of different contextual menus that are reflective of the particular context in which the menu application 82 is invoked. For example, in an email application where an email is being composed, invoking menu application 82 would generate a contextual menu that included the options of sending the email, cancelling the email, adding addresses to the email, adding attachments, and the like. The contents for such a contextual menu would also be maintained in non-volatile storage 212. Other examples of contextual menus will occur to those of ordinary skill in the art. In a present embodiment, client machines 102A and 102B may navigate for content using a browser application (e.g. 86). As will be explained further below, on client machine 102A, browser application 86 may be a mini-browser in the sense that it may be configured to render Web pages on the relatively small display 224 of client machine 102A. Often, during such rendering, those pages are presented in a format that may be different from how those pages are rendered on a traditional desktop browser application (e.g. browser 86 of client machine 102B). Mini-browsers typically attempt to convey substantially the same information as if the Web pages had been rendered on a full browser such as Internet Explorer®, Safari® or Firefox® on a traditional desktop or laptop computer like client machine 102B.

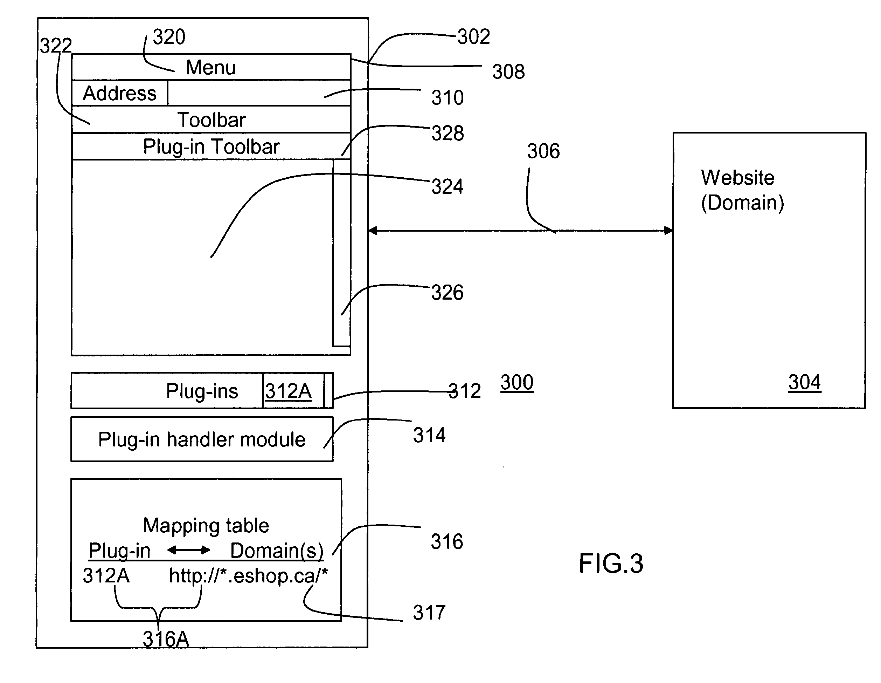

Referring to FIG. 3, there is shown selected components 300 of the system 100 to more clearly describe the present matter. As mentioned earlier, the system 100 includes a client computer 302 for communicatively connecting to a website 304 (typically of a content provider) over a network 306, such as the Internet. Client computer 302 executes Web browser program (e.g. 86) to present pages of the website 304 via the browser's visual interface 308, usually in the form of a window, on the computer's display screen (e.g. 224). The browser displays an address portion 310 in which a user can enter a website addresses (typically by entering a URL which identifies the website) to which the user desires the browser to navigate. Navigation may also be enabled by clicking a hyper-text link specifying a website address. The website address includes the domain name of the particular website. Content (defined by the pages of the website) is usually displayed in the browser display area 324 and can be scrolled using scroll controls 326.

The browser's visual interface 308 may comprise conventional toolbars 322 and menus 320 that generally provided Web navigation controls that are generally hard-coded within the Web browser application 86. In addition, a repository of browser plug-ins 312 is provided which extends the generally static functionality of the browser application 86 such as the conventional toolbars 322.

At least some of these plug-ins may comprise visual interface elements (e.g. plug-in toolbar 328), extending the visual interface 308, which may occupy screen space on display 222. A plug-in may perform data access functions using valuable network bandwidth through the computer's network connection, for example, to obtain or update data from one or more domains associated with the plug-in (not illustrated). To avoid use of screen space or bandwidth usage or both, it may be advantageous to only activate a domain specific plug-in when browsing an associated website. In order to manage the use of these domain specific plug-ins (e.g. 312A), a mapping table 316 associating domains and plug-ins and a plug-in handler module 314 may be provided to handle the mapping and activation or inactivation operations. As described further below, in one embodiment, a mapping 316A associating a plug-in 312A and a domain "eshop.ca" may comprise a domain filter 317 for determine a match with a current domain to activate the plug-in. While a table structure is referenced for storing one or more respective associations between the plug-ins and domains, other structures may be useful.

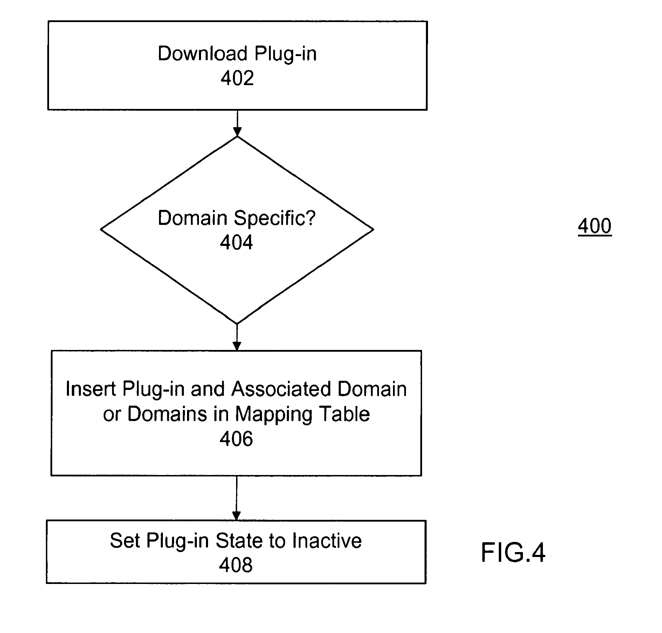

With reference to FIGs. 3 and 4, a flow chart 400 shows creation of the mapping table 316. At step 402, a plug-in may be installed (e.g. by downloading and executing installation instructions) to the computer 302. For a domain specific plug-in (step 404), an entry 406 is made in the mapping table to identify the plug-in and its associated domain (or domains if associated with more than one domain). The information may be automatically extracted during the installation of the plug-in. In some instances, the user may be prompted to indicate whether the plug-in is domain specific and to provide the domain information. The plug-in activity state may be set to inactive (step 408) so that its functionality is not active. The plug-in may be activated, as described further herein below, while the browser is pointed to connect to one of the domains associated with the plug-in. Alternatively an entry may be created in the table with the plug-in identification and no corresponding domain if the plug-in is not associated with any specific domain or domains.

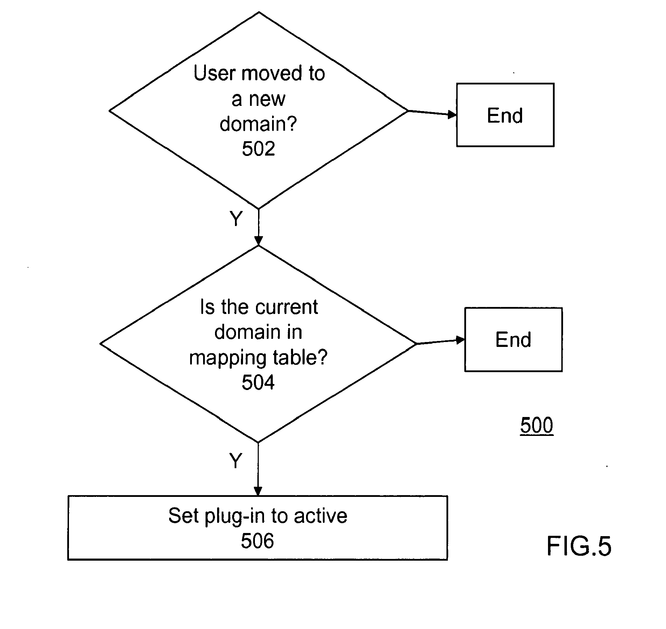

Referring now to FIG. 5, a flow chart 500 shows how the plug-in handler 314 manages activation of plug-ins in accordance with one embodiment. Operations may monitor the domain with which the browser is active, in particular, monitoring changes to the current active domain so as to dynamically turn on and turn off activation of the plug-ins 312 in accordance with the mapping table 316. If the browser 86 is pointed to a new domain (step 502) the plug-in handler 314 searches the mapping table 316 for the current domain requested. Browsers may be pointed to a domain in a number of ways. For example a user may click a link to the domain (whether in a Web page displayed by the browser, a favorite link maintained for the browser or in an external document which may invoke the browser), etc. A new URL may also be specified by inputting the URL in a command user input portion (e.g. 310) of the browser's visual interface 308, among others.

Sometimes, the code of a Web page embeds or otherwise contains another Web page. For example, a first Web page may frame the code of one or more other Web pages. To display the first Web page, the browser application may be required to retrieve and display content from the embedded Web pages as well as the containing Web page. Cached Web pages from search engine portals (e.g. Google™) are often framed such that a portion of the browser display area 324 presents content from the search engine portal and a portion displays cached contained of the embedded Web page. It may be desirable to activate an appropriate plug-in for an embedded or otherwise contained Web page as well as the outer or containing page. The current domain may be defined by the domain name of the first Web page or any of its embedded or otherwise contained Web pages. Thus monitoring of changes to the current domain may include reviewing changes to embedded or otherwise contained pages as well as the outer or containing Web page. The mapping table may be examined accordingly.

For any mapping providing an association between a plug-in and the domain identified in the search (step 504) the plug-in state may be set to active (step 506), and for all other domain specific plug-ins, their respective activation state may be set to inactive.

Plug-ins 312 may be configured for operation with all or a part of a particular website identified by the current domain name. Plug-in handler module 314 and mapping table 316 may be configured to use domain filters comprising a domain name such as a particular URL or URL expression to reference to an entire website or selected parts or part of the website. For example, expressions such as:
www.eshop.ca
www.eshop.ca/login
www.eshop.ca/products/computers.html
   may be used to capture all respective website references (URLs) matching with these expressions. Alternatively or in addition, regular expressions, such as "www.eshop.ca/products/*", may be employed for filtering references to a part of website.

Some Web browser applications support multiple browsing sessions such as in multiple browser windows or in multiple tabs within a same browser window. A user may be enabled to switch between different windows or tabs to browse one or more domains simultaneously. That is, more than one domain may be active with the browser via different windows or tabs. Plug-in activation state may be maintained on a per session basis such that a plug-in may be active while browsing an associated domain in one window or tab but inactive when browsing a different domain in another window or tab.

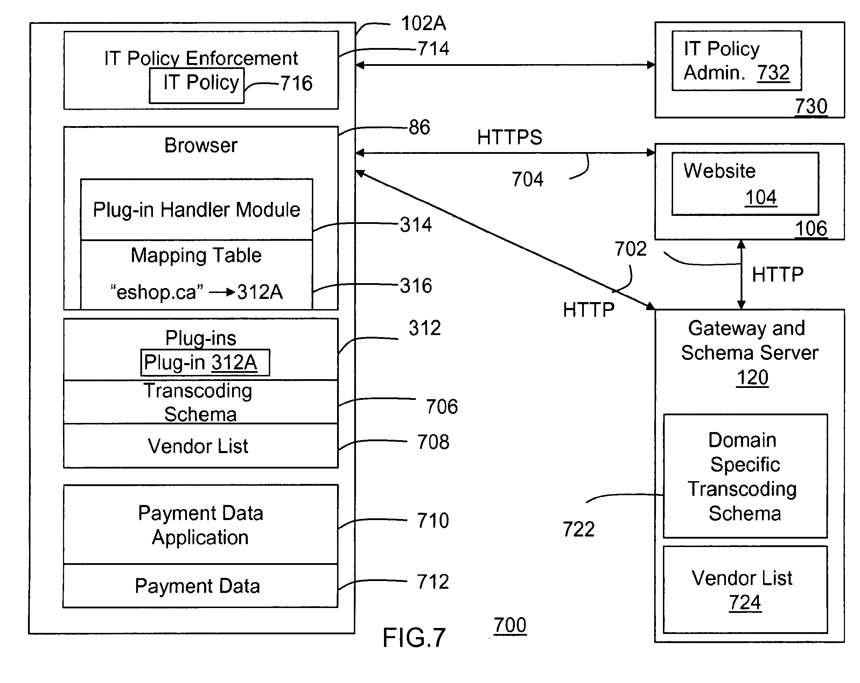

In accordance with an embodiment, FIG. 7 is a block diagram of a system 700 showing client machine 102A communicatively coupled to Web server 106 hosting website 104 and to gateway and schema server 120. The Client machine 102A may communicate with website 104 indirectly, through the intermediate server (gateway and schema server 120) as described further. Client machine 102A may also be coupled to an enterprise server 730 as shown hosting an IT policy administration component for configuring client machine 102A through rules or other mechanisms of an IT policy. In the present embodiment, for convenience one of the plug-ins 312 is denoted with reference 312A.

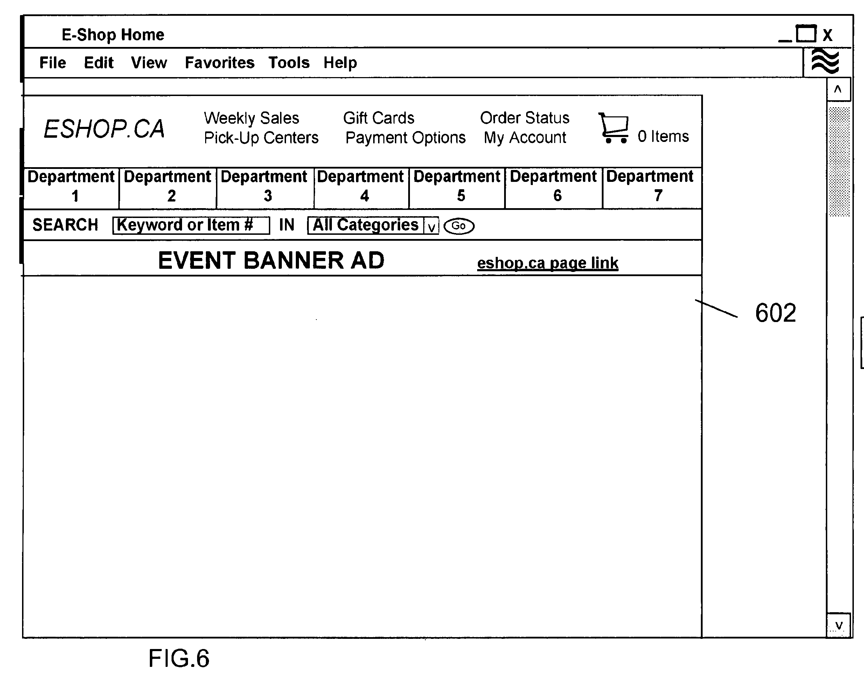

As described earlier, plug-in 312A may be registered with browser 86 via mapping table 316 and plug-in handler module 314 such that plug-in 312A is associated with one or more websites by their respective domains. The websites may offer various e-commerce services for the respective vendors providing the websites. A representative domain is fictitious site, eshop.ca, (FIG. 6) providing on-line shopping for products via Web pages such as representative page 602. In the present embodiment, plug-in 312A integrates with the browser application 86 to provide an optimized browsing experience. The plug-in 312A may utilize certain functionality of the browser application 86 such as communication transport, cache and cookie handling. Plug-in 312A may modify certain features or provide new ones.

Plug-in 312A registers one or more domain filters (e.g. www.eshop.ca) with browser 86 such that when a request to a domain is made that matches one of the filters (e.g. "http://www.eshop.ca/..."), the plug-in 312A may be activated and invoked. When activated, plug-in 312A may provide an optimized browsing experience utilizing transcoded Web pages derived (e.g. 602) from the pages of the websites associated with the plug-in 312A. Plug-in 312A may redirect at least some of the browser application Web page requests through gateway and schema server (e.g. 120). Gateway and schema server 120 may obtain the Web pages, apply transcoding operations in accordance with pre-defined domain specific schema 722 and return the Web pages as transcoded pages to the plug-in 312.

Alternatively or in addition, plug-in 312 may itself perform the transcoding, requesting the Web pages and applying transcoding operations (e.g. using applicable schema 706 retrieved from server 120 for the domain's Web pages) to obtain transcoded pages for rendering to display 224. Plug-in 312 may redirect page requests through gateway 120 for non-secure HTTP communications 702 and communicate directly with the website 104 for secure HTTPS communications 704 such as those often used to complete payment in when conducting an e-commerce related transaction with the website.

To enable transcoding operations, for each website, domain specific schema 722 may be pre-defined in response to the website structure and code of the Web pages, defining transcoding instructions for each type of Web page provided. Preferably, like Web pages sharing common Web page coding are grouped to define families of pages. Common transcoding instructions may be defined for each grouping or family and such transcoding instructions assembled to define a schema for the website. Transcoding may optimize the pages in response to communication, display or other requirements (whether preferences or limitations) of the target client computing devices. Transcoding may optimize the Web pages for particular client computing devices, such as mobile computing devices. When compared to desktop computing devices configured for Web communications, mobile computing devices comprise relatively small display screens. Desktops typically communicate via lower cost networks whereas mobile devices often communicate wirelessly, utilizing relatively expensive bandwidth.

Through transcoding, for example, plug-in 312 may provide additional functionality to a Web page. One such extended function is assistance with the completion of e-commerce transactions. Transcoding may providing access to a secure "wallet" payment data application 710 storing payment data 712 (e.g. credit card, PayPal®, vendor account or other payment data) on client machine 102A. Transcoding may incorporate code (e.g. scripts or commands) to access the payment data 712 via application 710 to populate payment forms for the website.

In accordance with the present embodiment, plug-in 312A may be configured to update its associated domains registered with the browser application 86 via plug-in handler 314 and mapping table 316. Plug-in 312 may obtain a current vendor list 724 (e.g. when invoked in association with a previously registered domain filter) to update its locally stored vendor list 708. Plug-in 312A may register new domains (i.e. "filters") in mapping table 316 or deregister (i.e. remove) those domains that are no longer supported. The list 724 may be obtained from gateway and schema server 120, for example.

Operation of plug-in 312A (among other components of client machine 102A) may be configured by an IT policy enforcement component 714 in accordance with an IT policy 716 received from the enterprise server 730 hosting an IT policy administration component 732. In an enterprise context, such as a business, institution or other organization, client machines 102 of that enterprise may be administered by an IT administrator who establishes and maintains an IT policy permitting or inhibiting certain activities or uses of these client machines 102. Each client machine (e.g. 102A) receives the IT policy 716 and enforces the IT policy 716 via IT enforcement component 714. For example, IT policy 716 may configure client machine 102A to permit or inhibit operation of certain plug-ins 312 such as plug-in 312A. IT policy 716 may be updated periodically and received accordingly by client machine 102A.

Invocation of the plug-in 312A by browser 86 and the operation thereof once invoked may be governed by the IT policy enforcement component. Typically software applications, plug-ins. etc, such as browser 86 and plug-in 312A operate "on top" of the IT policy enforcement component, so that their operations may be more easily controlled within the operating environment of the client machine 102A. For example, an attempt to invoke plug-in 312A via the browser 86 will not be permitted if the IT policy 716 inhibits the execution of the plug-in. If the plug-in 312A is already in operation and a new IT policy 716 is received that inhibits plug-in 312A, execution may be terminated, preferably with a suitable message or announcement provided to the user of client machine 102A. As described, if execution of plug-in 312A is reactivated by a further change to IT policy 716, plug-in 312A is configured to update its vendor list 708 automatically. Though the present embodiment of FIG. 7 is shown and described in an enterprise context, such context including IT policy related components 712, 714, 730 and 732 are optional.

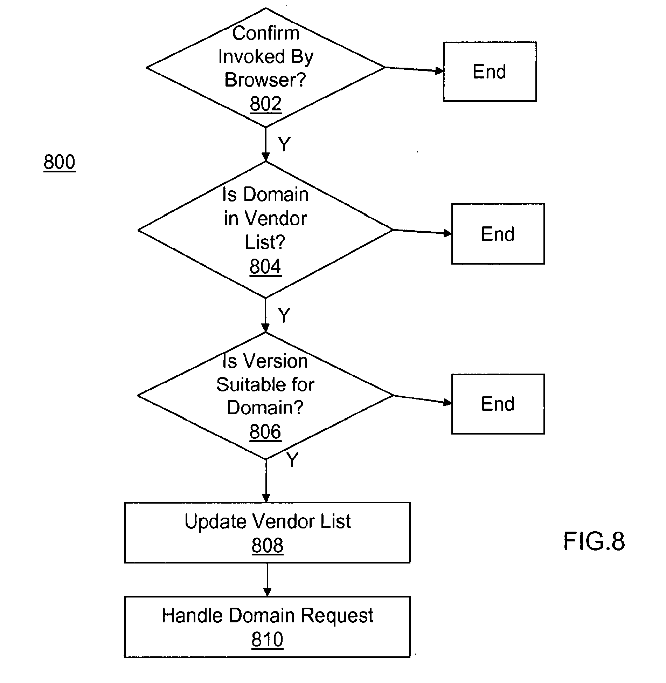

FIG. 8 illustrates a flowchart of operations 800 for the invocation of plug-in 312A. It is assumed throughout that execution is permitted by IT policy 716 in the present embodiment. At step 802, plug-in 312A verifies that it is invoked via browser application 86. At step 804 plug-in 312A confirms that the target domain is one with which the plug-in 312A is configured to work, for example, comparing the domain to its vendor list 708.

Different instances of plug-in 312A may have different functionality or features and be denoted with different versions. Some versions may not be applicable or acceptable to perform operations with websites of certain vendors. To accommodate such versioning, if necessary, at step 806, a confirmation is made that the version of plug-in 312A is suitable for the domain (which domain specific version requirement may be specified in vendor list 708, for example).

At step 808, plug-in 312A obtains a current vendor list 724 and, as applicable, registers or deregisters filters. Preferably it updates the vendor list only if it has not done so recently (e.g. within a predefined period of time).

In accordance with the confirmations (steps 802, 804 and 806), the plug-in's primary functionality is invoked to handle the browser request to the domain (step 810). The initiating browser request may be cancelled so that it is not performed by browser 86 per se and a proxied request made to gateway and schema server 120 to retrieve transcoded pages.

It will be apparent that step 808 may be performed (e.g. in a background mode) while plug-in 312A is invoked and operating (or even initiated while the confirmations are performed), for example, to accommodate communication with the remote server providing the updated (i.e. current) vendor list 724.

Thus it may be seen that in contrast to existing manually operated "on or off' solutions, plug-ins that are domain specific may be made accessible only when a user is actively using the domain, allowing the user to use one or more plug-ins simultaneously without sacrificing screen space and/or bandwidth unnecessarily. The solution is scaleable allowing many domain specific plug-ins (e.g. hundreds) to be installed and have specific ones activated only when using the domain or a one of the domains, as the case may be, for which the plug-in is intended. Accordingly, a domain specific plug-in need not be merely either on or off as defined manually by the user, but may be activated automatically in accordance with the browser's active domain to determine the state of the plug-in. If the active domain is registered with a plug-in the browser automatically turns it on, otherwise the browser automatically turns it off.

It will be appreciated by those of ordinary skill in the art that the matter can be embodied in other specific forms without departing from the essential character of the invention.

## Claims

1. A method for dynamically activating a plug-in (312, 312A) for operation with a Web browser (86), **characterized by**
defining (406) a mapping (316A) providing an association between the plug-in and at least part of each website (104, 304) with which the plug-in is to operate, said mapping comprising a respective domain name for each website; and
activating (504, 506) the plug-in for operation, in accordance with the mapping, only when a current domain that is active with the Web browser is associated with the plug-in.

2. The method of claim 1 wherein the mapping comprises at least one domain filter (317) identifying at least a part of a respective website with which the plug-in is to operate.

3. The method of claim 1 or 2 further comprising defining respective mappings for a plurality of respective plug-ins and the parts of each websites with which the respective plug-ins are to operate, said mapping comprising a respective domain name for each website; and activating a particular plug-in for operation in accordance with the mappings only when the current domain that is active witch the Web browser is associated with the particular plug-in.

4. The method of any one of claims 1 to 3 further comprising monitoring (502, 504) the current domain to determine whether to activate or deactivate the plug-in.

5. The method of any one of claims 1 to 4 wherein the plug-in is configured to obtain (808) an updated list (724) comprising one or more domain names for identifying each website with which the plug-in is to be associated and wherein the method comprises updating the mapping in response to the list.

6. The method of any one of claims 1 to 5 wherein the plug-in is configured to operate with at least one vendor's website (104) providing e-commerce services.

7. The method of any one of claims 1 to 6 wherein the plug-in is configured (316, 706, 708) to obtain transcoded Web pages from Web pages of the respective websites with which it is to operate and wherein the method further comprises invoking the plug-in to obtain transcoded Web pages from at least some of the Web pages of the current domain.

8. The method of claim 7 wherein the plug-in is configured (710, 712) to assist with the completion an e-commerce transaction and the method comprises invoking the plug-in to complete a particular transaction at the current domain.

9. The method of claim 1 wherein the Web browser (86) is executed on a mobile device (102A) configured for wireless communication.

10. A computing device (102A, 102B) comprising a processor (208) and a memory (212, 216) coupled thereto, said memory (212, 216) storing instructions for configuring the processor (208) when executed to dynamically activate a plug-in (312) for operation with a Web browser (86) in accordance with the method of any one of claims 1 to 9.

11. A computer program product comprising a computer readable medium embodying computer readable instructions for configuring a computer processor (208) when executed to dynamically activate a plug-in (312) for operation with a Web browser (86) in accordance with the method of any one of claims 1 to 9.

## Patentansprüche

1. Verfahren zum dynamischen Aktivieren eines Plug-ins (312, 312A) zum Betrieb mit einem Web-Browser (86), **gekennzeichnet durch** Definieren (406) einer Zuordnung (316A), die eine Verbindung zwischen dem Plug-in und zumindest einem Teil jeder Web-Site (104, 304) vorsieht, mit der das Plug-in funktionieren soll, wobei die Zuordnung einen jeweiligen Domain-Namen für jede Web-Site aufweist; und
Aktivieren (504, 506) des Plug-ins zum Betrieb, in Übereinstimmung mit der Zuordnung, nur dann, wenn eine aktuelle Domain, die mit dem Web-Browser aktiv ist, zu dem Plug-in gehört.

2. Verfahren gemäß Anspruch 1, wobei die Zuordnung zumindest einen Domain-Filter (317) aufweist, der zumindest einen Teil einer jeweiligen Web-Site identifiziert, mit der das Plug-in funktionieren soll.

3. Verfahren gemäß Anspruch 1 oder 2, das weiter aufweist Definieren jeweiliger Zuordnungen für eine Vielzahl von jeweiligen Plug-ins und die Teile jeweiliger Web-Sites, mit denen die jeweiligen Plug-ins funktionieren sollen, wobei die Zuordnung einen jeweiligen Domain-Namen für jede Web-Site aufweist; und Aktivieren eines bestimmten Plug-ins zum Betrieb, in Übereinstimmung mit den Zuordnungen, nur dann, wenn die aktuelle Domain, die mit dem Web-Browser aktiv ist, zu dem bestimmten Plug-in gehört.

4. Verfahren gemäß einem der Ansprüche 1 bis 3, das weiter aufweist Überwachen (502, 504) der aktuellen Domain, um zu bestimmen, ob das Plug-in zu aktivieren oder zu deaktivieren ist.

5. Verfahren gemäß einem der Ansprüche 1 bis 4, wobei das Plug-in konfiguriert ist, eine aktualisierte Liste (724) zu erlangen (808), die einen oder mehrere Domain-Namen aufweist zum Identifizieren jeder Web-Site, zu der das Plug-in zugeordnet werden soll, und wobei das Verfahren ein Aktualisieren der Zuordnung in Reaktion auf die Liste aufweist.

6. Verfahren gemäß einem der Ansprüche 1 bis 5, wobei das Plug-in konfiguriert ist, mit zumindest der Web-Site (104) eines Anbieters zu funktionieren, der E-Commerce-Dienste anbietet.

7. Verfahren gemäß einem der Ansprüche 1 bis 6, wobei das Plug-in konfiguriert ist (316, 706, 708), transcodierte Webseiten von Webseiten der jeweiligen Web-Sites zu erlangen, mit denen es funktionieren soll, und wobei das Verfahren weiter aufweist Aufrufen des Plug-ins, um transcodierte Webseiten von zumindest einigen der Webseiten der aktuellen Domain zu erlangen.

8. Verfahren gemäß Anspruch 7, wobei das Plug-in konfiguriert ist (710, 712), die Ausführung einer E-Commerce-Transaktion zu unterstützen, und das Verfahren aufweist ein Aufrufen des Plug-ins, um eine bestimmte Transaktion an der aktuellen Domain auszuführen.

9. Verfahren gemäß Anspruch 1, wobei der Web-Browser (86) auf einer mobilen Vorrichtung (102A) ausgeführt wird, die für eine drahtlose Kommunikation konfiguriert ist.

10. Computervorrichtung (102A, 102B), die einen Prozessor (208) und einen damit verbundenen Speicher (212, 216) aufweist, wobei der Speicher (212, 216) Anweisungen speichert zum Konfigurieren des Prozessors (208) bei Ausführung, um dynamisch ein Plug-in (312) zum Betrieb mit einem Web-Browser (86) in Übereinstimmung mit dem Verfahren gemäß einem der Ansprüche 1 bis 9 zu aktivieren.

11. Computerprogrammprodukt, das ein Computer-lesbares Medium aufweist, das Computer-lesbare Anweisungen enthält zum Konfigurieren eines Computerprozessors (208) bei Ausführung, um dynamisch ein Plug-in (312) zum Betrieb mit einem Web-Browser (86) in Übereinstimmung mit dem Verfahren gemäß einem der Ansprüche 1 bis 9 zu aktivieren.

## Revendications

1. Procédé destiné à activer dynamiquement un greffon logiciel (312, 312A) afin qu'il fonctionne avec un navigateur web (86), **caractérisé par** les étapes consistant à :
définir (406) une table de correspondance (316A) fournissant une association entre le greffon logiciel et au moins une partie de chaque site web (104, 304) avec lequel le greffon logiciel doit fonctionner, ladite table de correspondance comprenant un nom de domaine respectif pour chaque site web ; et
activer (504, 506) le greffon logiciel afin qu'il ne fonctionne, d'après la table de correspondance, que lorsqu'un domaine courant qui coopère avec le navigateur web est associé au greffon logiciel.

2. Procédé selon la revendication 1, dans lequel la table de correspondance comprend au moins un filtre de domaine (317) identifiant au moins une partie d'un site web respectif avec lequel le greffon logiciel doit fonctionner.

3. Procédé selon la revendication 1 ou 2, comprenant en outre les étapes consistant à définir des tables de correspondance respectives pour une pluralité de greffons logiciels et les parties de chacun des sites web avec lesquels les greffons logiciels respectifs doivent fonctionner, ladite table de correspondance comprenant un nom de domaine respectif pour chaque site web, et activer un greffon logiciel particulier afin qu'il ne fonctionne, d'après la table de correspondance, que lorsque le domaine courant qui coopère avec le navigateur web est associé au greffon logiciel particulier.

4. Procédé selon l'une quelconque des revendications 1 à 3, comprenant en outre l'étape consistant à surveiller (502, 504) le domaine courant afin de déterminer s'il convient d'activer ou de désactiver le greffon logiciel.

5. Procédé selon l'une quelconque des revendications 1 à 4, dans lequel le greffon logiciel est configuré pour obtenir (808) une liste mise à jour (724) comprenant un ou plusieurs noms de domaines, afin d'identifier chacun des sites web avec lesquels le greffon logiciel doit être associé et dans lequel le procédé comprend la mise à jour de la table de correspondance en fonction de la liste.

6. Procédé selon l'une quelconque des revendications 1 à 5, dans lequel le greffon logiciel est configuré pour fonctionner avec au moins un site web d'un fournisseur (104) fournissant des services de commerce électronique.

7. Procédé selon l'une quelconque des revendications 1 à 6, dans lequel le greffon logiciel est configuré (316, 706, 708) pour obtenir des pages web transcodées à partir de pages web des sites web respectifs avec lesquels il doit fonctionner et dans lequel le procédé comprend en outre l'étape consistant à appeler le greffon logiciel pour obtenir des pages web transcodées à partir d'au moins certaines des pages web du domaine courant.

8. Procédé selon la revendication 7, dans lequel le greffon logiciel est configuré (710, 712) pour contribuer à l'achèvement d'une opération de commerce électronique et le procédé comprend l'étape consistant à appeler le greffon logiciel pour achever une opération particulière dans le domaine courant.

9. Procédé selon la revendication 1, dans lequel le navigateur web (86) est exécuté sur un dispositif mobile (102A) configuré pour la communication sans fil.

10. Dispositif informatique (102A, 102B) comprenant un processeur (208) et une mémoire (212, 216) qui y est couplée, ladite mémoire (212, 216) stockant des instructions qui, lorsqu'elles sont exécutées, sont destinées à configurer le processeur (208) afin d'activer dynamiquement un greffon logiciel (312) pour qu'il fonctionne avec un navigateur web (86) conformément au procédé selon l'une quelconque des revendications 1 à 9.

11. Progiciel d'ordinateur comprenant un support lisible par ordinateur matérialisant des instructions lisibles par ordinateur qui, lorsqu'elles sont exécutées, sont destinées à configurer le processeur (208) afin d'activer dynamiquement un greffon logiciel (312) pour qu'il fonctionne avec un navigateur web (86) conformément au procédé selon l'une quelconque des revendications 1 à 9.
